# EUROPEAN PATENT SPECIFICATION

(11) **EP 2 699 454 B1**
(45) Date of publication and mention of the grant of the patent: **15.11.2017**
(21) Application number: 12773509.0
(22) Date of filing: 27.03.2012
(51) Int. Cl.: B60R 21/232, B60R 21/231, B60R 21/233, B60R 21/214

(54) **UNIFICATION AIRBAG MODULE**
VEREINHEITLICHUNGSMODUL FÜR AIRBAGS
MODULE DE COUSSIN DE SÉCURITÉ GONFLABLE UNIFIÉ

(30) Priority: 19.04.2011 KR 20110036137
(43) Date of publication of application: 26.02.2014
(73) Proprietor: Autoliv Development AB, 447 83 Vårgårda (SE)
(72) Inventor: KIM, Jin-Kook, Wonju-si Kangwon-do 220-805 (KR); LEE, Sun-Young, Wonju-si Kangwon-do 220-805 (KR)
(74) Representative: Müller Verweyen
(86) International application number: PCT/KR2012/002204
(87) International publication number: WO 2012/144748

(56) References cited:
- DE-A1- 10 256 024
- DE-A1- 19 745 872
- DE-A1- 19 757 410
- JP-A- H07 329 688
- JP-A- 2004 106 772
- JP-A- 2005 001 412
- JP-A- 2008 120 313
- JP-A- 2008 284 904
- JP-A- 2008 284 904
- KR-A- 960 000 639
- KR-A- 19980 022 887

## Description

### Technical Field

The present invention relates to a unification airbag module. More particularly, the present invention relates to a unification airbag module capable of serving as a passenger airbag and a curtain airbag by simultaneously protecting the front and lateral sides of an occupant in the operation of the airbag, and capable of protecting the face of the occupant by providing a shock absorbing unit to prevent the impact of the inflated airbag from being directly applied to the face of the occupant.

### Background Art

In general, an airbag system is a representative safety device to protect passengers upon vehicle collision.

The airbag system is classified into a driver airbag (DAB) and a passenger airbag (PAB), which are installed in a steering wheel and an instrumental panel, respectively, to prevent front-side collision of a driver and a passenger, and a curtain airbag (CAB) mounted on the side portion of the vehicle such that the safety of occupants can be ensured upon side collision.

Therefore, the driver and passenger airbags are operated in the front-side collision of occupants to protect the occupants, and the curtain airbag is operated in the side collision to protect the occupants.

However, according to the above schemes, since the airbags must be separately installed, the number of the working processes may be increased so that the working efficiency may be degraded.

In addition, the airbags must be fabricated in the proper form, and the airbags must be separately equipped with inflators to generate inflation gas. Accordingly, the airbags have complex structures, and the fabricating costs of the airbags may be increased.

In order to solve the above problems, airbags to protect both of the front and lateral sides of an occupant have been disclosed in US Patent No. 3,897,961 (issued on August 5, 1975, hereinafter referred to as patent document 1) and US Patent No. 5,470,103 (issued on November 29, 1995, hereinafter referred to as patent document 2).

According to patent document 1, side and front airbags are separately provided, and a roll-type chest airbag is provided at the central portion between the side and front airbags, so that the side and front of the occupant can be protected.

Patent document 2 discloses an airbag deployed at front and side portions of the occupant to protect the head of the occupant.

However, according to prior arts 1 and 2, the airbag is inflated upon vehicle collision, and the inflated airbag exerts impact on the face of the occupant, so that the occupant may be injured.

### [Cited document]

### [Patent document]

(Patent document 1) US Patent No. 3,897,961 (issue date: August 5, 1975)
(Patent document 2) US Patent No. 5,470,103 (issue date: November 29, 1995)

Patent document JP 2004106772 A discloses further airbag arrangements deployed from the ceiling to surround an occupant.

Patent document JP 2008120313 A discloses an unification airbag module according to the preamble of claim 1.

### Disclosure of Invention

### Technical Problem

The present invention has been made to solve the problems occurring in the prior art, and an object of the present invention is to provide a unification airbag module capable of protecting the front and lateral sides of an occupant from impact by surrounding the occupant such that the head and the body of the occupant can be prevented from colliding with internal structures of a vehicle. Especially, tear lines are formed in the unification airbag module to prevent the face of the occupant from being impacted by the inflated airbag.

### Solution to Problem

In order to accomplish the above object, there is provided a unification airbag module according to claim 1. It includes a cushion deployed in a substantially C shape to protect a front and a side of an occupant, a fixing member having a substantially C shape, mounted on a ceiling of a vehicle and formed therein with a capacity such that the cushion is rolled and received in the cavity, and an inflator supplying inflation gas to the cushion. The cushion includes a front portion corresponding to a head and a chest of the occupant, and a side portion corresponding to both sides of the head and the chest of the occupant. A main chamber is formed on edges of the front and side portions, and a plurality of sub-chambers communicating with the main chamber are formed at the front portion and the side portion.

Tear lines are formed in a longitudinal direction at both sides of a central sub-chamber of the sub-chambers formed at the front portion.

The tear lines are formed at an upper portion and both sides of a central sub-chamber of the sub-chambers formed at the front portion.

A lower chamber is formed below the tear lines in correspondence with the chest of the occupant.

### Brief Description of Drawings

FIG. 1 is a perspective view showing a unification airbag according to the exemplary embodiment of the present invention;
FIG. 2 is a perspective view showing the inflation state of a cushion shown in FIG. 1;
FIG. 3 is a side view showing the inflation state of the cushion;
FIG. 4 is a front view showing the inflation state of the cushion;
FIG. 5 is a plan view showing the inflation state of the cushion;
FIG. 6 is a side view showing a driver colliding with the cushion;
FIG. 7 is a perspective view showing the inflation state of a cushion of a unification airbag module according to another embodiment of the present invention; and
FIG. 8 is a side view showing a driver colliding with the cushion shown in FIG. 7.

### Best Mode for Carrying out the Invention

Hereinafter, exemplary embodiments of the present invention will be described in detail with reference to accompanying drawings.

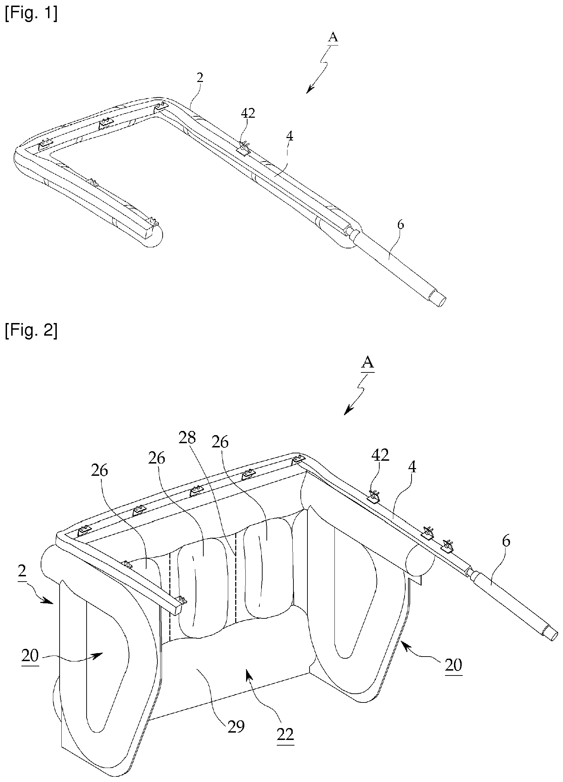

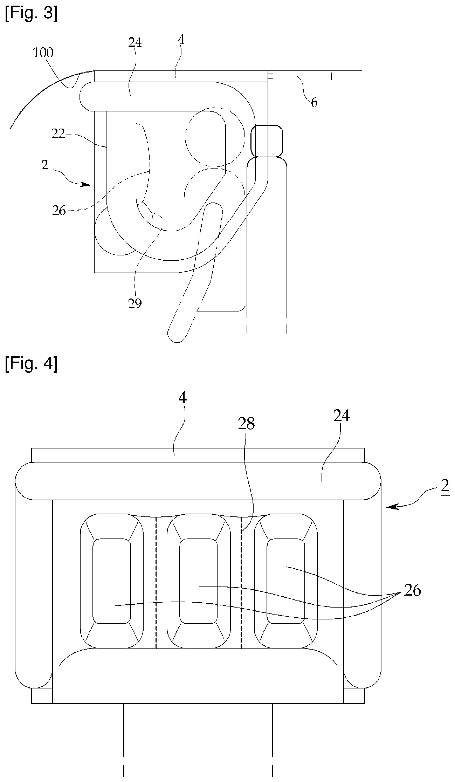

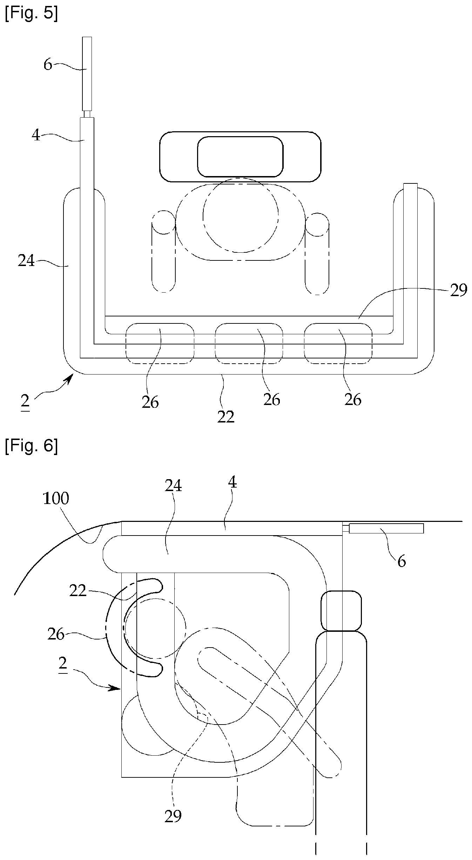

FIG. 1 is a perspective view showing a unification airbag module according to the exemplary embodiment of the present invention, FIGS. 2 to 5 are perspective, side, front and plan views showing the inflation state of a cushion shown in FIG. 1, respectively, and FIG. 6 is a side view showing a driver colliding with the cushion.

As shown in FIGS. 1 to 5, the unification airbag module A according to the present invention includes a cushion 2, a fixing member 4, and an inflator 6.

The cushion 2 is formed by bonding edges of two fabrics after overlapping the two fabrics with each other so that an inflatable space can be formed inside the cushion 2. Preferably, the cushion 2 is inflated in a substantially C shape when viewed in a plan view so that the front and the lateral sides of an occupant can be protected.

The cushion 2 is rolled and provided on the fixing member 4. When the cushion 2 is first mounted on the fixing member 4, the cushion 2 is fixed to the fixing member 4 by using a band in the state that the cushion 2 has the substantially C shape. When the cushion 2 is deployed, the cushion 2 goes down and covers the front and the lateral sides of the occupant.

The cushion 2, which has been deployed, includes a front portion 22 corresponding to the face and the chest of the occupant and side portions 20 corresponding to both sides of the occupant.

Especially, a main chamber 24 is provided on the edges of the front and side portions 22 and 20.

In other words, the main chamber 24 is inflated in a substantially pipe shape and more largely than a remaining portion of the cushion 2, thereby exactly maintaining the deployment shape of the cushion 2. Accordingly, the impact absorbing rate can be more improved.

In addition, a plurality of sub-chambers 26 are formed in the front and side portions 22 and 20 while communicating with the main chamber 24. The sub-chambers 26 have a convex shape.

Especially, the front portion 22 includes three sub-chambers 26 and tear lines 28 formed at both sides of the central sub-chamber 26 such that the tear lines 28 can be torn when the cushion 2 is deployed.

For instance, two sets of tear lines 28 are linearly formed in the longitudinal direction corresponding to the head of the occupant while being spaced in parallel to each other.

Accordingly, when impact occurs, the occupant is sprung forward due to inertia, so that the face of the occupant makes contact with the inflated cushion 2. In this case, the front portion 22 primarily absorbs the impact applied to the head of the occupant.

In addition, as the head of the occupant collides with the front portion 22, the tear lines 28 are torn so that both sides of the sub-chamber 26 located at the center of the front portion 22 are separated from the front portion 22.

Then, the separated sub-chamber 26 is elastically deformed toward the dashboard of the vehicle, so that the impact secondarily applied to the head of the occupant by the internal structures, such as the dashboard and front glass, can be absorbed.

Therefore, according to the present invention, the impact applied to the head of the occupant can be absorbed through the two-step impact absorbing operations, thereby attenuating the impact applied to the head and the chest of the occupant when the occupant collides with the internal structure of the vehicle. Thus, the head and the chest of the occupant can be prevented from being injured.

A lower chamber 29, which is convexly inflated, can be formed below the tear lines 28.

The lower chamber 29 is inflated together with the cushion 2 to prevent the head of the occupant from directly making contact with the dashboard when the head and chest of the occupant are inclined downward in the state that the head and chest of the occupant make contact with the sub-chamber 26.

Accordingly, the lower chamber 29 can protect the head as well as the chest of the occupant from the impact.

The fixing member 4 is formed therein with a cavity to fix the rolled cushion 2 therein. The fixing member 4 is connected to a gas inlet (not shown) of the cushion 2 such that gas generated from an inflator 6 can be injected into the cushion 2.

The fixing member 4 is installed at an upper portion of the inside of the vehicle. The fixing member 4 is formed in the substantially C shape by using a metallic pipe or a hard material.

Preferably, the fixing member 4 has a plurality of taps 42 and is fixed onto a ceiling 100 of the vehicle by using bolts or rivets. The rolled cushion 2 is mounted onto the fixing member 4 by using clips or bands.

As generally known in the art, if vehicle collision is detected by a sensor, the inflator 6 is exploded to instantly inflate the cushion 2 by using explosive gas. The inflator 6 supplies high-pressure nitrogen or inexplosive inflation gas harmless to humans to the cushion 2.

Hereinafter, the operation and the coupling state of the airbag module according to the exemplary embodiment of the present invention will be described.

First, the fixing member 4 is mounted on the ceiling 100 of the vehicle, and the inflator 6 is connected to one end of the fixing member 4.

Thereafter, the cushion 2 is rolled in such a manner that the volume of the cushion 2 can be minimized. In this state, the cushion 2 is mounted on the fixing member 4. In other words, after closely bringing the cushion 2 into contact with the lower portion of the fixing member 4, the cushion 2 is fixed onto the fixing member 4 by using bands or clips.

In addition, a portion of the cushion 2 is connected to the inflator 6 such that the cushion 2 communicates with the inflator 6. Accordingly, gas generated from the inflator 6 can be introduced into the cushion 2.

When the vehicle collision occurs, the inflator 6 is exploded according to the signal of the sensor, and gas generated from the inflator 6 is introduced into the cushion 2.

Then, the cushion 2 is inflated and deployed downward to surround the front and lateral sides of the occupant to protect the front and side of the occupant from impact.

In particular, if the occupant is sprung forward due to the inertia, the face of the occupant makes contact with the inflated cushion 2. At this time, the front portion 22 of the inflated cushion 2 primarily absorbs the impact applied to the head of the occupant.

As shown in FIG. 6, the tear lines 28 are torn as the head of the occupant collides with the front portion 22 and the central sub-chamber 26 is elastically deformed toward the dashboard of the vehicle, so that the impact applied to the head of the occupant due to the internal structures, such as the dashboard and the front glass, can be secondarily absorbed.

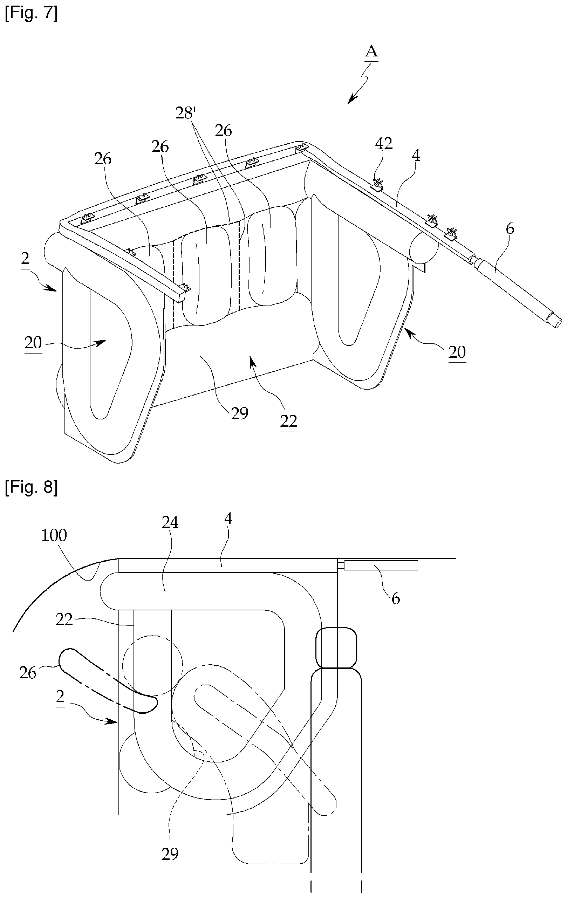

FIG. 7 is a perspective view showing the inflation state of the cushion of the unification airbag module according to another embodiment of the present invention, and FIG. 8 is a side view showing a driver colliding with the cushion shown in FIG. 7.

As shown in FIG. 7, the unification airbag module according to another embodiment of the present invention is identical to the previous embodiment of the present invention except that tear lines 28' have the reverse-U shape when viewed from the front.

Thus, according to the unification airbag module of another embodiment of the present invention, when the front collision occurs, if the face of the occupant makes contact with the inflated cushion 2 due to the inertia, the front portion 22 of the inflated cushion 2 primarily absorbs the impact applied to the head of the occupant.

Then, the tear lines 28 having the reverse-U shape are torn as the head of the occupant collides with the front portion 22 and the central sub-chamber 26 having the top surface and both lateral sides separated from the front potion 22 is elastically deformed toward the dashboard of the vehicle, so that the impact applied to the head of the occupant due to the internal structures, such as the dashboard and the front glass, can be secondarily absorbed.

At this time, the lower chamber 29 stably supports the chest of the occupant, thereby preventing the injury of the chest of the occupant.

According to the present invention, the cushion integrally formed at the front and lateral sides of the occupant can be deployed when the vehicle collision occurs, so that the front and lateral sides of the head and the chest of the occupant can be safely protected.

### Industrial Applicability

As described above, according to the present invention, the occupant is completely surrounded by the airbag module so that the occupant can be protected from secondary impacts, especially, front and side impacts occurring when the occupant collides with the internal structure of the vehicle. Therefore, the airbag module according to the present invention can improve the safety performance.

In addition, according to the present invention, the tear line is formed at the front of the cushion, so the impact is primarily absorbed by the cushion and then secondarily absorbed by the sub-chamber as the tear line is torn, so that the impact applied to the head of the occupant can be minimized.

## Claims

1. A unification airbag module comprising:
a cushion (2) deployed in a substantially C shape to protect a front and both sides of an occupant;
an inflator (6) supplying inflation gas to the cushion (2),
wherein the cushion (2) includes a front portion (22) and two side portions (20), a main chamber (24) is formed on edges of the front and side portions (22 and 20), and a plurality of sub-chambers (26) communicating with the main chamber (24) are formed at the front portion (22) and/or the side portions (20), wherein the front portion (22) protects the front side of the occupant and the side portions (20) protect the lateral sides of the occupant when deployed, **characterized in that** the module comprise a fixing member (4), said fixing member (4) having a substantially C shape and being adapted to be mounted on a ceiling (100) of a vehicle, wherein the cushion (2) is fixed to the fixing member (4).

2. The unification airbag module of claim 1, wherein tear lines (28, 28') are formed in a longitudinal direction at both sides of a central sub-chamber (26) of the sub-chambers (26) formed at the front portion (22).

3. The unification airbag module of claim 1, wherein tear lines (28, 28') are formed at an upper portion and both sides of a central sub-chamber (26) of the sub-chambers (26) formed at the front portion (22).

4. The unification airbag module of claim 2 or 3, wherein a lower chamber (29) is formed below the tear lines (28, 28') in correspondence with the chest of the occupant.

## Patentansprüche

1. Vereinigungsmodul für Airbags, umfassend:
ein Kissen (2), das im Wesentlichen in einer C-Form entfaltet wird, damit es eine Vorderseite und beide Seiten eines Insassen schützt;
einen Gasgenerator (6), der dem Kissen (2) Füllgas zuführt,
wobei das Kissen (2) einen vorderen Abschnitt (22) und zwei Seitenabschnitte (20) aufweist, eine Hauptkammer (24) an Rändern des vorderen Abschnitts und der Seitenabschnitte (22 und 20) ausgebildet ist und eine Vielzahl von Nebenkammern (26), die mit der Hauptkammer (24) in Verbindung stehen, am vorderen Abschnitt (22) und/oder den Seitenabschnitten (20) ausgebildet ist, wobei im entfalteten Zustand der vordere Abschnitt (22) die Vorderseite des Insassen schützt und die Seitenabschnitte (20) die Seiten des Insassen schützen, **dadurch gekennzeichnet, dass** das Modul ein Befestigungselement (4) umfasst, wobei das Befestigungselement (4) im Wesentlichen eine C-Form aufweist und so ausgelegt ist, dass es an einem Himmel (100) eines Fahrzeugs befestigt wird, wobei das Kissen (2) am Befestigungselement (4) befestigt ist.

2. Vereinigungsmodul für Airbags nach Anspruch 1, wobei in einer Längsrichtung Reißlinien (28, 28') auf beiden Seiten einer mittigen Nebenkammer (26) von den am vorderen Abschnitt (22) ausgebildeten Nebenkammern (26) ausgebildet sind.

3. Vereinigungsmodul für Airbags nach Anspruch 1, wobei Reißlinien (28, 28') an einem oberen Abschnitt und auf beiden Seiten einer mittigen Nebenkammer (26) von den am vorderen Abschnitt (22) ausgebildeten Nebenkammern (26) ausgebildet sind.

4. Vereinigungsmodul für Airbags nach Anspruch 2 oder 3, wobei unter den Reißlinien (28, 28') eine untere Kammer (29) in Übereinstimmung mit der Brust des Insassen ausgebildet ist.

## Revendications

1. Module de coussin de sécurité gonflable unifié comprenant :
un coussin (2) déployé dans une forme sensiblement en C pour protéger un devant et les deux côtés d'un occupant ;
un gonfleur (6) alimentant du gaz de gonflage dans le coussin (2),
dans lequel le coussin (2) comporte une partie avant (22) et deux parties latérales (20), un compartiment principal (24) est formé sur des bords des parties avant et latérales (22 et 20), et une pluralité de compartiments secondaires (26) communiquant avec le compartiment principal (24) sont formés sur la partie avant (22) et/ou les parties latérales (20), dans lequel, dans l'état déployé, la partie avant (22) protège le côté avant de l'occupant et les parties latérales (20) protègent les côtés latéraux de l'occupant, **caractérisé en ce que** le module comprend un élément de fixation (4), ledit élément de fixation (4) présentant une forme sensiblement en C et étant adapté pour être monté sur un plafond (100) d'un véhicule, le coussin (2) étant fixé à l'élément de fixation (4).

2. Module de coussin de sécurité gonflable unifié selon la revendication 1, dans lequel des lignes de rupture (28, 28') sont formées dans une direction longitudinale des deux côtés d'un compartiment secondaire central (26) des compartiments secondaires (26) formés sur la partie avant (22).

3. Module de coussin de sécurité gonflable unifié selon la revendication 1, dans lequel des lignes de rupture (28, 28') sont formées sur une partie supérieure et des deux côtés d'un compartiment secondaire central (26) des compartiments secondaires (26) formés sur la partie avant (22).

4. Module de coussin de sécurité gonflable unifié selon la revendication 2 ou 3, dans lequel un compartiment inférieur (29) est formé sous les lignes de rupture (28, 28') en correspondance avec la poitrine de l'occupant.
